# EUROPEAN PATENT APPLICATION

(11) **EP 4 582 970 A1**
(43) Date of publication of application: **09.07.2025**
(21) Application number: 23867144.0
(22) Date of filing: 02.08.2023
(51) Int. Cl.: G06F 16/2455, G06F 16/2458

(54) **DATA QUERY METHOD AND CLOUD SERVICE SYSTEM**

(30) Priority: 21.09.2022 CN 202211149163
(71) Applicant: Huawei Cloud Computing Technologies Co., Ltd., Guiyang, Guizhou 550025 (CN)
(72) Inventor: LI, Liang, Guiyang, Guizhou 550025 (CN); ZHANG, Wenliang, Guiyang, Guizhou 550025 (CN); ZHONG, Yanhui, Guiyang, Guizhou 550025 (CN); MA, Wenlong, Guiyang, Guizhou 550025 (CN)
(74) Representative: Maiwald GmbH
(86) International application number: PCT/CN2023/110714
(87) International publication number: WO 2024/060849

(57) **Abstract**

A data query method and a cloud service system are provided. In this method, N AQP messages are generated based on a data query message. In addition, sampling parameters corresponding to the AQP messages have different values. A data query result may be quickly fed back to a client for an AQP message with a small sampling parameter value. This prevents a user from feeling tired due to an excessively long wait, improving service experience of the user. Moreover, a data query result corresponding to each AQP message may be obtained based on the N AQP messages, so that the data query results fed back to the client are increasingly accurate.

## Description

This application claims priority to Chinese Patent Application No. 202211149163.7, filed with the China National Intellectual Property Administration on September 21, 2022 and entitled "DATA QUERY METHOD AND CLOUD SERVICE SYSTEM", which is incorporated herein by reference in its entirety.

### TECHNICAL FIELD

Embodiments of this application relate to the field of data query technologies, and more specifically, to a data query method and a cloud service system.

### BACKGROUND

At present, a cloud-native data warehouse has some quite clear advantages over a data warehouse with a conventional off-cloud customer-built data center architecture. The advantages of the cloud-native data warehouse are mainly as follows: (1) the cloud-native data warehouse may be elastically scaled based on peaks and troughs of a service; (2) the cloud-native data warehouse may be scaled out infinitely; (3) the cloud-native data warehouse may use a pay-per-use mode, and the billing mode is flexible and reduces a total cost for a customer; and (4) concurrent throughputs are high, so the cloud-native data warehouse is suitable for batch processing services such as offline reports. To support the elastic scaling capability of the cloud-native data warehouse, a core technical approach is to use an architecture in which "storage" and "compute" are deployed separately, which is referred to as "decoupled storage-compute" for short. In this architecture, storage and compute are fully decoupled, and may be scaled independently. In addition, a compute node does not need to maintain a task related to data loss, and a recovery speed is extremely fast.

However, in a data access scenario, a data access latency increases significantly due to a factor of a network latency between a compute node and a storage node in the "decoupled storage-compute" architecture of the cloud-native data warehouse. If wait duration of a user exceeds a few seconds during a data query, the user feels tired. This affects user experience, and even leads to user loss. Therefore, a mismatch between the "decoupled storage-compute" architecture of the cloud-native data warehouse and a requirement for a low latency in data access is a technical problem that needs to be resolved urgently.

### SUMMARY

This application provides a data query method. In this method, N AQP messages are generated based on a data query message, and sampling parameters corresponding to the AQP messages have different values. A data query result may be quickly fed back to a client for an AQP message with a small sampling parameter value. This prevents a user from feeling tired due to an excessively long wait, improving service experience of the user. Moreover, in this application, a data query result corresponding to each AQP message may be obtained based on the N AQP messages, so that the data query results fed back to the client are increasingly accurate. Therefore, the data query method provided in this application can ensure a latency and accuracy of a data query.

According to a first aspect, a data query method is provided. For example, the method may be applied to a cloud service system architecture, or may be performed by a component part (for example, a chip or a circuit) in a cloud service system architecture. This is not limited. For example, the method provided in this application may be applied to a "cloud-native data warehouse" system architecture, or may be applied to a "cloud-native lakehouse architecture". This is not limited.

For example, the cloud service system architecture may include a cloud service control plane module and a compute node module. The method includes: generating, by the cloud service control plane module, N second messages based on a first message, where the first message is a data query request message, each of the N second messages is an approximate query processing AQP message, each of the N second messages corresponds to a sampling parameter, the sampling parameters have different values, and the N is an integer greater than 1; obtaining, by the compute node module based on the N second messages, a data query result corresponding to each second message; and sending, by the compute node module, M data query response messages, where each of the M data query response messages carries information about a corresponding data query result, the M data query response messages are in one-to-one correspondence with M second messages in the N second messages, and the M is less than or equal to the N.

The following should be noted: In an existing solution, an AQP query technology is also used. However, it is quite difficult to select a proper sampling parameter in the AQP technology, because setting a sampling parameter to a smaller value results in a lower latency but a larger error, and setting a sampling parameter to a larger value results in a higher latency but a smaller error; therefore, in the conventional technology, a latency and accuracy of a query usually cannot be both ensured. For example, if a user sends one SQL message, only one AQP response message can be obtained finally. Either the user may quickly obtain the AQP response message but a query result is inaccurate, or the user needs to wait for a long time to finally obtain a satisfactory query result. Based on the solution provided in this application, the data query results can be quickly fed back to a user; and ideal computation accuracy can be finally achieved because the data query results corresponding to the plurality of second messages may be obtained. This can prevent the user from feeling tired during the data query, and improve accuracy of the data query, improving service experience of the user.

**In** a possible implementation, the cloud service system architecture includes N computing clusters and a storage node. The obtaining, by the compute node module based on the N second messages, a data query result corresponding to each second message includes: sending, by the cloud service control plane module, the N second messages to the N computing clusters respectively, where the N computing clusters are in one-to-one correspondence with the N second messages; and obtaining, by the N computing clusters, data from the storage node based on the N second messages respectively, to generate the data query results.

Based on the foregoing technical solution, in this application, the N computing clusters may be simultaneously started for the N second messages to query data. Therefore, a data query speed can be further ensured, improving service experience of the user.

In a possible implementation, the M data query response messages are data query response messages corresponding to the M second messages with smaller sampling parameter values in the N second messages.

Based on the foregoing technical solution, in this application, the data query results can be quickly fed back to the user; and ideal computation accuracy can be finally achieved because the plurality of data query results may be obtained. This can prevent the user from feeling tired during the data query, improving service experience of the user.

In a possible implementation, the cloud service system architecture further includes a user interface module. The user interface module establishes a connection to a client. The method further includes: if the sent M data query response messages meet a first condition, disconnecting, by the user interface module, from the client, where the first condition is used to determine whether a corresponding data query result carried in each of the M data query response messages meets first accuracy.

In this application, for example, the first accuracy may be a preconfigured parameter, or the first accuracy may be a parameter determined by the client. This is not limited.

Based on the foregoing technical solution, in this application, if the M data query response messages that are fed back already meet a requirement of the client, for example, a corresponding data query result carried in each of the M data query response messages is greater than or equal to the first accuracy, the user may choose to disconnect from the cloud service system architecture. Specifically, the client may disconnect from the user interface of the cloud service system architecture. In this case, the cloud service control plane may quickly shut down computing clusters that have not finished running, to reduce cloud resources, thereby reducing costs of the user.

In a possible implementation, the N and the M are configured by the client, or the N and the M are configured by the cloud service system architecture, or the N and the M may be provided by a hint part of SQL syntax, or the N and the M may be parameters configured by the user when the user connects to the cloud service system architecture.

Based on the foregoing technical solution, in this application, values of the M and the M may be flexibly configured by the client or a person skilled in the art.

In a possible implementation, the method further includes: receiving, by the cloud service control plane module, the first message, where the first message is a structured query language SQL message.

In a possible implementation, the first message carries indication information, and the indication information indicates to feed back the M data query response messages.

Based on the foregoing technical solution, in this application, the first message may carry the indication information, and the indication information indicates that the M data query response messages need to be fed back. It should be understood that, if the first message does not carry the indication information, a method in the conventional technology is used for a query by default. In other words, the technical solution provided in this application may be compatible with the conventional technology.

In a possible implementation, the method further includes: receiving, by the cloud service control plane module, a third message, and generating the first message based on the third message. The first message is a structured query language SQL message, the third message is a data query request message, and the third message is in a language different from that of the first message.

For example, an SQL compilation module on the cloud service control plane generates the first message based on the third message, where the first message is a structured query language SQL message. In this application, the third message may be in, for example, an R language, a C language, or a Python language. This is not limited.

In a possible implementation, the third message carries indication information, and the indication information indicates to feed back the M data query response messages.

In a possible implementation, the third message is a Python message.

Based on the foregoing technical solution, the method provided in this application may be applied to an SQL client, a Python client, or the like. This is not limited.

According to a second aspect, a cloud service system is provided. The system is configured to perform the method according to any possible implementation of the first aspect. Specifically, the system may include a unit and/or a module configured to perform the method according to any possible implementation of the first aspect.

For beneficial effects corresponding to the system, refer to the descriptions of the beneficial effects on the method side. Details are not described herein again.

The cloud service system includes a cloud service control plane module, a compute node module, and a storage node module. The cloud service control plane module is configured to generate N second messages based on a first message, where the first message is a data query request message, each of the N second messages is an approximate query processing AQP message, each of the N second messages corresponds to a sampling parameter, the sampling parameters have different values, and the N is an integer greater than 1; the compute node module is configured to obtain, based on the N second messages, a data query result corresponding to each second message; and the compute node module is configured to send M data query response messages, where each of the M data query response messages carries information about a corresponding data query result, the M data query response messages are in one-to-one correspondence with M second messages in the N second messages, and the M is less than or equal to the N.

In a possible implementation, the compute node includes N computing clusters, and the cloud service system further includes the storage node module. That the compute node module is configured to obtain, based on the N second messages, a data query result corresponding to each second message includes: the cloud service control plane module is further configured to send the N second messages to the N computing clusters respectively, where the N computing clusters are in one-to-one correspondence with the N second messages; and the N computing clusters are configured to obtain data from the storage node based on the N second messages respectively, to generate the data query results.

In a possible implementation, the cloud service system further includes a user interface module, and the user interface module is configured to establish a connection to a client. If the M data query response messages meet a first condition, the user interface module is configured to disconnect from the client, where the first condition is used to determine whether a corresponding data query result carried in each of the M data query response messages meets first accuracy.

In a possible implementation, the M data query response messages are data query response messages corresponding to the M second messages with smaller sampling parameter values in the N second messages.

In a possible implementation, the N and the M are configured by the client, or the N and the M are configured by the cloud service system architecture.

In a possible implementation, the cloud service control plane module is further configured to receive the first message, where the first message is a structured query language SQL message.

In a possible implementation, the first message carries indication information, and the indication information indicates to feed back the M data query response messages.

In a possible implementation, the cloud service control plane module is further configured to: receive a third message, and generate the first message based on the third message, where the first message is a structured query language SQL message, the third message is a data query request message, and the third message is in a language different from that of the first message.

In a possible implementation, the third message carries indication information, and the indication information indicates to feed back the M data query response messages.

In a possible implementation, the third message is a Python message.

According to a third aspect, a cloud service system is provided. The system includes at least one processor, configured to execute a computer program or instructions stored in a memory, to perform the method according to any possible implementation of the first aspect. Optionally, the apparatus further includes the memory, configured to store the computer program or the instructions. Optionally, the apparatus further includes a communication interface, and the processor reads, through the communication interface, the computer program or the instructions stored in the memory.

According to a fourth aspect, this application provides a processor, including an input circuit, an output circuit, and a processing circuit. The processing circuit is configured to: receive a signal by using the input circuit, and transmit a signal by using the output circuit, to enable the processor to perform the method according to any possible implementation of the first aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, and a signal output by the output circuit may be output to, for example, but not limited to, a transmitter and transmitted by the transmitter. The input circuit and the output circuit may be a same circuit, where the circuit is used as the input circuit and the output circuit at different moments. Specific implementations of the processor and the various circuits are not limited in this embodiment of this application.

Unless otherwise specified, or if operations such as sending and obtaining/receiving related to the processor do not conflict with actual functions or internal logic of the operations in related descriptions, the operations may be understood as operations such as outputting, receiving, and inputting performed by the processor, or may be understood as sending and receiving operations performed by a radio frequency circuit and an antenna. This is not limited in this application.

According to a fifth aspect, a processing device is provided, including a processor and a memory. The processor is configured to: read instructions stored in the memory, receive a signal by using a transceiver, and transmit a signal by using a transmitter, to perform the method according to any possible implementation of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed in different chips. A type of the memory and a manner in which the memory and the processor are disposed are not limited in this embodiment of this application.

It should be understood that a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device according to the fifth aspect may be one or more chips. The processor in the processing device may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to a sixth aspect, a chip is provided. The chip obtains instructions and executes the instructions to implement the method according to any one of the first aspect and the implementations of the first aspect.

Optionally, in an implementation, the chip includes a processor and a data interface. The processor reads, through the data interface, instructions stored in a memory, to perform the method according to any one of the first aspect and the implementations of the first aspect.

Optionally, in an implementation, the chip may further include the memory, where the memory stores the instructions. The processor is configured to execute the instructions stored in the memory. When the instructions are executed, the processor is configured to perform the method according to any one of the first aspect and the implementations of the first aspect.

According to a seventh aspect, a computer program product is provided. The computer program product includes computer program code. When the computer program code is run on a computer, the computer is enabled to perform the method according to any one of the first aspect and the implementations of the first aspect.

According to an eighth aspect, a computer-readable storage medium is provided, including instructions. The instructions are used to implement the method according to any one of the first aspect and the implementations of the first aspect.

For example, the computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may specifically be a non-volatile storage medium.

According to a ninth aspect, a computing device is provided. The computing device includes a processor and a memory. The processor of the computing device is configured to execute instructions stored in the memory, to enable the computing device to perform the method according to any possible implementation of the first aspect.

According to a tenth aspect, a compute node cluster is provided. The compute node cluster includes at least one compute node, and each compute node includes a processor and a memory. The processor of the at least one compute node is configured to execute instructions stored in the memory of the at least one compute node, to enable the compute node cluster to perform the method according to any possible implementation of the first aspect.

### BRIEF DESCRIPTION OF DRAWINGS

FIG. 1 is a diagram of a cloud service system architecture;
FIG. 2 is a diagram of a cloud-native lakehouse architecture;
FIG. 3 is a schematic flowchart of a data query method 300 according to this application;
FIG. 4 is a schematic flowchart of a data query method 400 according to this application;
FIG. 5 is a block diagram of a cloud service system according to this application;
FIG. 6 is a block diagram of a computing device 100 according to this application;
FIG. 7 is a block diagram of a computing device cluster according to this application; and
FIG. 8 is a block diagram of another computing device cluster according to this application.

### DESCRIPTION OF EMBODIMENTS

The following describes technical solutions in embodiments of this application with reference to accompanying drawings.

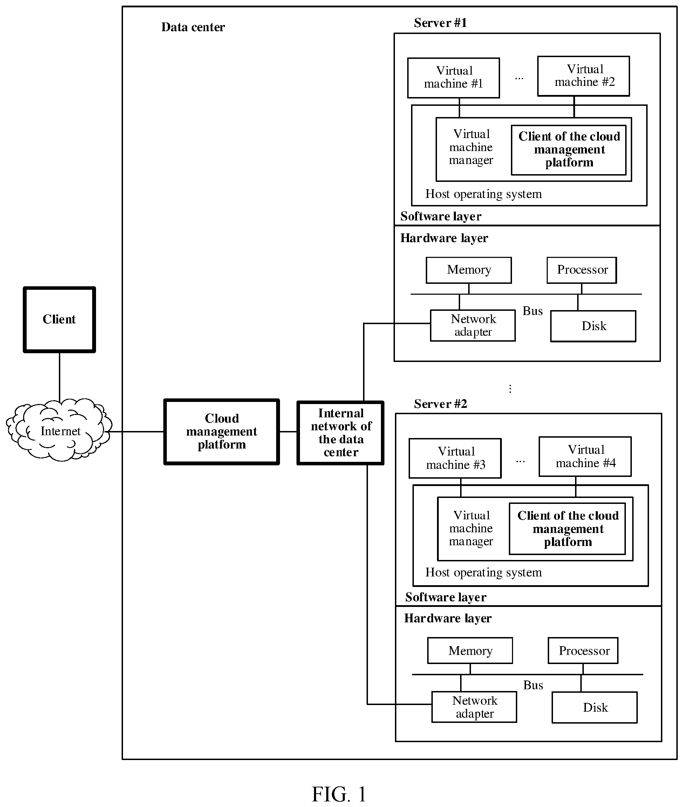

FIG. 1 is a diagram of a cloud service system architecture. As shown in FIG. 1, a client may be connected to a cloud management platform by using the Internet, and the cloud management platform is connected to an internal network of a data center. Generally, a data center includes a plurality of servers. The data center shown in FIG. 1 includes two servers. A server #1 is used as an example. For example, the server #1 includes a software layer and a hardware layer. For example, the software layer may further include a plurality of virtual machines and a host operating system. The host operating system includes a virtual machine manager, and a client of the cloud management platform. For example, the hardware layer may include a processor, a memory, a hard disk, a network adapter, and a data bus.

The cloud management platform is configured to provide an access interface (for example, the cloud management platform is configured to provide an interface or an application programming interface (application programming interface, API)). A tenant may operate the client to remotely access the access interface, to register a cloud account and a password on the cloud management platform, and log in to the cloud management platform. After the cloud account and the password are successfully authenticated by the cloud management platform, the tenant may further pay to select and purchase a virtual machine of specific specifications (a processor, a memory, and a disk) on the cloud management platform. After the paid purchase is successful, the cloud management platform provides an account and a password for remotely logging in to the purchased virtual machine. The client may remotely log in to the virtual machine, to install and run an application of the tenant on the virtual machine. A client of the cloud management platform may be configured to: receive a control-plane command sent by the cloud management platform, create the virtual machine on a server according to the control-plane control command, and perform full-service life-cycle management on the virtual machine. Therefore, the tenant may create, manage, log in to, and operate the virtual machine in the cloud data center by using the cloud management platform. A virtual machine may also be referred to as an "elastic compute service (elastic compute service, ECS)", an "elastic instance", or the like, and different cloud service providers use different names.

With development of cloud technologies, a next generation of "cloud-native data warehouse (cloud-native data warehouse, DWaaS)" has emerged. A "cloud-native data warehouse" may be understood as a loosely coupled database system that is in a new dynamic environment such as a public cloud, a private cloud, or a hybrid cloud, and that is based on an architecture of decoupled storage and compute and allows independent and elastic scale-out of storage and compute. Because compute and storage are decoupled (referred to as a "decoupled storage-compute" architecture for short), both storage and compute may be scaled out independently. For example, computing resources may be scaled out when there is a lack of computing resources, and storage resources may be scaled out when there is a lack of storage resources, thereby reducing costs. Another advantage of the "decoupled storage-compute" architecture is as follows: It is assumed that 10 nodes are used for a query originally, and it may take 1 hour to obtain a query result. However, on a cloud, 100 nodes may be started simultaneously for a query, and it may take only 6 minutes to obtain a query result. On a cloud, billing is usually performed based on usage of computing resources and usage of storage resources. This is equivalent to achieving better user experience at a same cost.

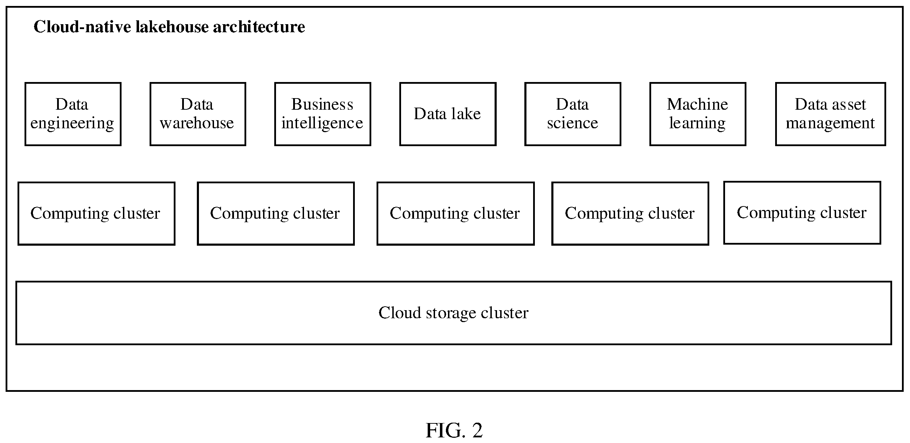

From a perspective of data sharing, the next-generation cloud-native architecture may share a same copy of data. There is no need to obtain many small storage clusters through division due to a cluster scale. This amounts to sharing of a large storage cluster. In other words, storage is uniform, and only one copy of data needs to be stored. For example, after data enters the system, the data may be directly placed in the storage without being organized, and may be used directly when processing is to be performed. After processing, modeled data is formed in the warehouse. The entire processing is performed on a same platform. Different computing clusters may be used in different computing scenarios. A cloud-native "lakehouse" (Lakehouse) architecture shown in FIG. 2 is also based on this principle (in this case, the "storage cluster" may be understood as a "data lake"). The "lake" and a "warehouse" may be integrated into one system, to implement data processing, data warehouse, business intelligence, data lake, data science, machine learning, data asset management, data governance, modeling, and the like. There are a plurality of computing clusters behind, which share a cloud storage cluster. In this architecture, different computing clusters do different things but share data. This can well address an issue of data processing between a plurality of storage clusters and between a plurality of systems in a conventional architecture.

However, no matter in the "cloud-native data warehouse" or the "cloud-native lakehouse architecture", a disadvantage of the "decoupled storage-compute" architecture is quite apparent. In the "decoupled storage-compute" architecture, a network latency occurs between a compute engine and a storage engine. Therefore, a high latency occurs in an interaction scenario (for example, data access or data query), affecting service experience of a user. In other words, a mismatch between a "decoupled storage-compute" architecture of a cloud-native data computation platform and a requirement for a low latency in an interaction scenario is a technical problem that needs to be resolved urgently.

In view of this, this application provides a data query method based on the cloud service system architecture. In this method, N AQP messages are generated based on a data query message and sampling parameters corresponding to the AQP messages have different values. A data query result may be quickly fed back to a client for an AQP message with a small sampling parameter value. This prevents a user from feeling tired due to an excessively long wait, improving service experience of the user. Moreover, in this application, a data query result corresponding to each AQP message may be obtained based on the N AQP messages, so that the data query results fed back to the client are increasingly accurate. Therefore, the data query method provided in this application can ensure a latency and accuracy of a data query.

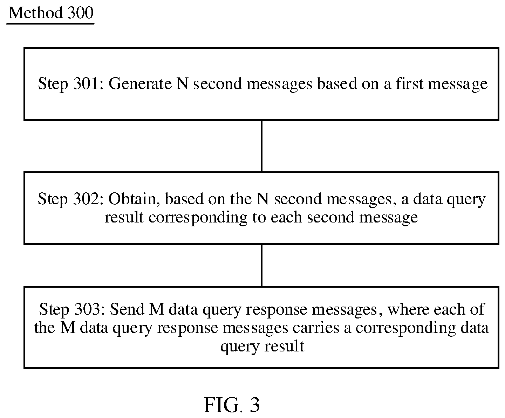

FIG. 3 is a schematic flowchart of a data query method 300 according to this application. The method may be applied to a cloud service system architecture (for example, the cloud service architecture shown in FIG. 1 or FIG. 2). The cloud service architecture includes a compute node (a "compute node" may also be understood as a "computing cluster") and a storage node (a "storage node" may also be understood as a "storage cluster"). As shown in FIG. 3, the method includes the following steps.

Step 301: Generate N second messages based on a first message.

In this application, the first message may be a data query request message. In this application, a second message may be understood as a sampling query request message. For example, a second message may be an approximate query processing (approximate query processing, AQP) message.

Each of the N second messages corresponds to a sampling parameter, the sampling parameters have different values, and the N is an integer greater than 1.

For example, a cloud service control plane in a cloud service system may generate the N second messages based on the first message. Specifically, for example, the control plane in the cloud service system includes a structured query language (structured query language, SQL) compiler #1, and the compiler #1 may generate the N second messages based on the first message.

In this application, the sampling parameters (a "sampling parameter" may also be understood as a "sampling proportion") corresponding to the generated second messages have different values. For example, the values of the sampling parameters may be set with a specific step. For example, assuming that N=10, the values of the sampling parameters may be set to 5%, 15%, 25%, 35%, 45%, 55%, 65%, 75%, 85%, and 95%. Each of the values of the 10 sampling parameters corresponds to one second message.

It should be understood that, for an AQP technology, setting a sampling parameter to a smaller value results in a lower latency but a larger error, and setting a sampling parameter to a larger value results in a higher latency but a smaller error. For example, if a value of a sampling parameter corresponding to a second message is 5%, an estimation result may be obtained quickly, but the estimation result may be inaccurate. For another example, if a value of a sampling parameter corresponding to a second message is 95%, a speed of obtaining an estimation result is low, but the estimation result is accurate.

In a possible implementation, before step 301, the method further includes: receiving the first message. The first message is an SQL message. Specifically, for example, a client #1 may establish a connection to a user interface of the cloud service system, and send the first message to the user interface of the cloud service system. The user interface sends the first message to the control plane of the cloud service system. The compiler #1 on the control plane of the cloud service system may generate the N second messages based on the first message. For example, the client #1 is a client that can send an SQL message. Optionally, in this application, the first message may carry indication information, and the indication information indicates that M data query response messages need to be fed back. It should be understood that, if the first message does not carry the indication information, a method in the conventional technology is used for a query by default. In other words, the technical solution provided in this application may be compatible with the conventional technology.

In another possible implementation, before step 301, the method further includes: receiving a third message, and generating the first message based on the third message. The first message is an SQL message, the third message is a data query request message, and the third message is in a language different from that of the first message. For example, the third message may be in a Python language, an R language, or a C language. This is not limited.

Specifically, a client #2 may establish a connection to the user interface of the cloud service system, and send the second message to the user interface of the cloud service system. For example, the third message is a non-SQL message. For example, the third message is a Python message. The user interface sends the third message to the control plane of the cloud service system. The control plane of the cloud service system further includes a compiler #2, and the compiler #2 may convert the third message into the first message. In addition, the compiler #1 may generate the N second messages based on the first message. For example, the client #2 is a client that can send a Python message. Optionally, in this application, the third message may carry indication information, and the indication information indicates that M data query response messages need to be fed back. It should be understood that, if the third message does not carry the indication information, a method in the conventional technology is used for a query by default. In other words, the technical solution provided in this application may be compatible with the conventional technology.

Step 302: Obtain, based on the N second messages, a data query result corresponding to each second message.

In a possible implementation, the control plane of the cloud service system determines to start N computing clusters, and each computing cluster processes one corresponding second message. Specifically, each computing cluster connects to cloud storage, samples and loads data, and starts to complete a computing task. In this application, the N computing clusters are in one-to-one correspondence with the N second messages. A compute node in the cloud service system architecture includes the N computing clusters. Each of the N computing clusters obtains data from a storage node in the cloud service system architecture, and performs data computation.

In a possible implementation, the M data query response messages are data query response messages corresponding to M second messages with smaller sampling parameter values in the N second messages.

For example, a computing cluster #1 processes a second message #1. It is assumed that a value of a sampling parameter corresponding to the second message #1 is 5%. In this case, the computing cluster #1 may quickly obtain sampled data from the storage cluster, complete computation, and send a data query result to the user interface; and then the user interface sends the data query result to a client. For example, a computing cluster #2 processes a second message #2. It is assumed that a value of a sampling parameter corresponding to the second message #2 is 10%. In this case, the computing cluster #2 may obtain sampled data from the storage cluster, complete computation, and send a data query result to the user interface; and then the user interface sends the data query result to the client. The rest can be deduced by analogy. Each computing cluster processes a corresponding second message, loads data from the storage node, completes data computation, and feeds back a data query result to the client.

It should be noted that, in this application, each "computing cluster" may include one or more computing devices.

In this application, a specific implementation of "obtaining, based on the N second messages, a data query result corresponding to each second message" may alternatively be that N computing devices are started based on the N second messages, where the N computing devices are in one-to-one correspondence with the N second messages. It may also be understood that, in this application, a plurality of computing devices (which may be understood as "a computing cluster" in this case) may collaboratively process one second message, or each computing device may process one second message. This is not limited. In other words, in this application, one second message may be processed based on a granularity of a "computing device", or one second message may be processed based on a granularity of a "computing cluster".

In this application, each second message corresponds to one computing cluster, and the sampling parameters corresponding to the second messages have different values. A computing cluster corresponding to a second message with a small sampling parameter value may quickly complete computation and feed back a data query result to the client. This prevents a user from feeling tired due to an excessively long wait, improving user experience. **In** addition, because the plurality of computing clusters are started simultaneously, the data query results fed back to the client are increasingly accurate. It may also be understood that, in the technical solution provided in this application, the data query results may be refreshed in real time. **In** other words, in the technical solution provided in this application, the plurality of data query results may be returned to the user, and the plurality of data query results that are fed back gradually approach a result of an exact query.

**In** this implementation, the data query results can be quickly fed back to the user; and ideal computation accuracy can be finally achieved because data query result accuracy becomes higher each time. **In** addition, in the process of feeding back the data query results to the user, experience of a "progress bar" may be provided to the user. In this way, a preliminary query result can be quickly fed back, and an ideal query result can be slowly approached, improving service experience of the user.

Step 303: Send the M data query response messages, where each of the M data query response messages carries a corresponding data query result.

In this application, the M data query response messages are in one-to-one correspondence with the M second messages in the N second messages.

In this application, the N and the M may be configured by the client, or the N and the M may be configured by the cloud service system architecture, or the N and the M may be provided by a hint part of SQL syntax, or the N and the M may be parameters configured by the user when a connection is established between the user and the cloud service architecture.

In this application, the M may be less than or equal to the N. For example, when receiving several query response messages, if the user finds that a difference between a plurality of data query results is not large or data query results already meet an expectation of the user, the user may choose to end the query request in a timely manner. For example, when the user receives three query results, if an expectation of the user is already met (for example, the data query results are greater than or equal to first accuracy), and seven query results have not been fed back, the user may choose to disconnect from the cloud service system architecture. Specifically, the client may disconnect from the user interface of the cloud service system architecture. In this case, for example, the cloud service control plane may quickly shut down seven computing clusters that have not finished running, to reduce cloud resources, thereby reducing costs of the user.

The following should be noted: In an existing solution, the AQP query technology is also used. However, it is quite difficult to select a proper sampling parameter in the AQP technology, because setting a sampling parameter to a smaller value results in a lower latency but a larger error, and setting a sampling parameter to a larger value results in a higher latency but a smaller error; therefore, in the conventional technology, a latency and accuracy of a query usually cannot be both ensured. For example, if a user sends one SQL message, only one AQP response message can be obtained finally. Either the user may quickly obtain the AQP response message but a query result is inaccurate, or the user needs to wait for a long time to finally obtain a satisfactory query result.

Based on the solution provided in this application, the data query results can be quickly fed back to the user; and ideal computation accuracy can be finally achieved because the plurality of data query results may be obtained. This can prevent the user from feeling tired during the data query, improving service experience of the user. In addition, in the solution of this application, the data query may further be ended in real time based on a requirement of the user. For example, if the user determines that a currently obtained data query result already meets a requirement, the user may choose to end the data query. This can reduce data query costs for the user, and applicable scenarios are more flexible.

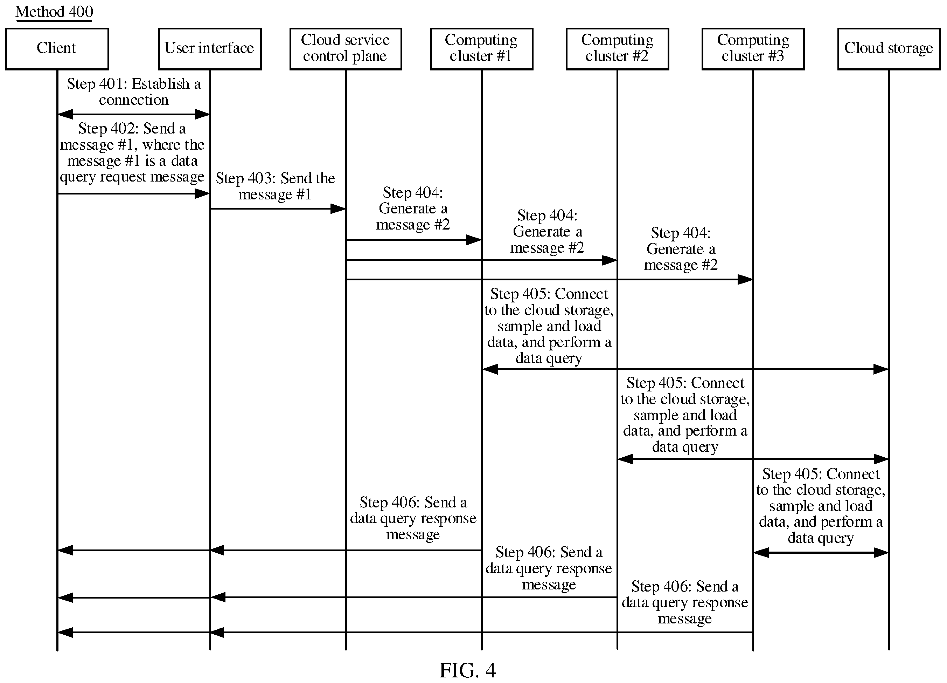

FIG. 4 is a schematic flowchart of a data query method 400 according to a specific embodiment of this application. The method 400 includes a client and a cloud service system architecture. Specifically, the cloud service system architecture includes a user interface, a cloud service control plane, a compute node, and a storage node. The user interface is an interface for interaction between a user and the cloud service system architecture. The cloud service control plane may be responsible for generating a plurality of AQP computing tasks for a user query, and scheduling a plurality of concurrent computing clusters; and may be responsible for shutting down the computing clusters after the tasks are completed. The compute node may be responsible for completing computation of an SQL task. The compute node in this application may support AQP computation. The storage node may be, for example, an object storage service (object storage service, OBS). As shown in FIG. 4, the method includes the following steps.

Step 401: A client establishes a connection to a user interface of a cloud service system architecture.

For example, when a user uses an interactive application, the user may establish a connection to the cloud service system architecture after passing account permission verification at the user interface.

For example, the client may be a client that sends an SQL message, or the client may be a client that sends another message. The client is not limited in this application. For example, the client may be a client that sends a Python message.

Step 402: The client sends a message #1 to the user interface, where the message #1 is a data query request message.

For example, after the client establishes the connection to the cloud service system architecture, the architecture may provide a cloud service for the user.

In this embodiment, the message #1 may be an SQL message, or the message #1 may be a non-SQL message. For example, the message #1 may be a Python message. This is not limited.

In a possible implementation, it is assumed that the client sends an SQL message, and the SQL message carries indication information, indicating that M data query response messages need to be fed back, in other words, indicating the cloud service system architecture to query data by using the method provided in this application. For example, specific code of the indication information may be "SELECT avg(col1) FROM tbl WITH INTERACTIVE 10 RESULT", where "WITH INTERACTIVE 10 RESULT" is unique syntax, notifying the system to enable an interactive query feature and feed back 10 query results.

In another possible implementation, it is assumed that the client sends a Python message, and the Python message carries indication information, indicating that M data query response messages need to be fed back, in other words, indicating the cloud service system architecture to query data by using the method provided in this application. For example, specific code of the indication information may be "Plot(interactive=M)". In Python, a Plot function is usually used for plotting. In this embodiment, the original Plot function in the Python language is modified, and a prompt parameter "interactive" is added for the Plot function. "interactive=0" is a default value. If the user enters nothing, a method in the conventional technology is directly used for a query. If the user provides a value of interactive, for example, the value is equal to 10, the technical solution provided in this application is used, namely, the system is notified to enable the interactive query feature and feed back 10 query results.

Step 403: The user interface sends the message #1 to the cloud service control plane, and correspondingly, the cloud service control plane receives the message #1.

Step 404: The cloud service control plane generates N messages #2 based on the message #1, where the N is an integer greater than 1.

In this application, a message #2 is a sampling query message. For example, a message #2 may be an AQP message.

In a possible implementation, it is assumed that the message #1 is an SQL message. In this case, an SQL compiler #1 on the cloud service control plane may generate, based on the indication information, 10 sampling query request messages, for example, AQP messages. Specifically, the SQL compiler #1 may sequentially generate the 10 sampling query requests, and start 10 independent computing clusters (the compute node includes the plurality of computing clusters). The 10 computing clusters may fulfill the corresponding 10 sampling query request messages. For convenience, FIG. 4 shows only three of the sampling query request messages.

In another possible implementation, it is assumed that the message #1 is a Python message. In this case, an SQL compiler #2 on the cloud service control plane may first convert the Python message into an SQL message. Then, an SQL compiler #1 may generate, based on the indication information carried in the Python message, 10 sampling query request messages, for example, AQP messages. Specifically, the SQL compiler #1 may sequentially generate the 10 sampling query requests, and start 10 independent computing clusters. The 10 computing clusters may fulfill the corresponding 10 sampling query requests.

It should be noted that, in this application, sampling parameters corresponding to the sampling query request messages have different values.

Step 405: After receiving an AQP query request, each computing cluster starts to connect to cloud storage, sample and load data, and perform data computation.

Step 406: Computing clusters send the M data query response messages to the user interface, where the data query response messages include data query results, and the M is less than or equal to the N.

In a possible implementation, the user interface then sends the data query results to the client.

For example, the computing clusters need to send a total of 10 data query response messages to the client, and the data query responses now carry data query results.

Optionally, when receiving several query response messages, if the user finds that a difference between a plurality of data query results is not large or data query results already meet an expectation of the user (for example, the data query results meet first accuracy), the user may choose to end the query request in a timely manner. For example, when the user receives five query results, if an expectation of the user is already met, and five query results have not been fed back, the user may choose to disconnect from the cloud service system architecture. Specifically, the client may disconnect from the user interface of the cloud service system architecture. In this case, the cloud service control plane may quickly shut down five computing clusters that have not finished running, to reduce cloud resources, thereby reducing costs of the user.

Based on the foregoing technical solution, the data query results can be quickly fed back to the user; and ideal computation accuracy can be finally achieved because the plurality of data query results may be obtained. This can prevent the user from feeling tired due to an excessively long wait during the data query, and ensure accuracy of the data query, improving service experience of the user.

It should be noted that the data query method provided in embodiments of this application may be applied to the cloud service system architecture, or may be performed by a component part (for example, a chip or a circuit) in the cloud service system architecture. This is not limited. For example, the method provided in this application may be applied to a "cloud-native data warehouse" system architecture, or may be applied to a cloud-native lakehouse architecture. This is not limited. For example, the cloud service system includes a hardware layer, an operating system layer running above the hardware layer, and an application layer running above the operating system layer. The hardware layer includes hardware such as a processing unit, a memory, and a memory control unit. Functions and structures of the hardware are described in detail in a later part. The operating system is any one or more types of computer operating systems that implement service processing by using a process (process), for example, a Linux operating system, a Unix operating system, an Android operating system, an iOS operating system, and a Windows operating system. The application layer includes application programs such as a browser, an address book, word processing software, and instant messaging software. **In** addition, optionally, a computing system may be, for example, a handheld device such as a smartphone, or a terminal device such as a personal computer. This is not particularly limited in this application, provided that the method provided in embodiments of this application can be implemented. The data query method provided in embodiments of this application may be performed by a computing system, or a functional module that is in a computing system and that can invoke a program and execute the program.

It can be understood that the examples in the method 300 and the method 400 in embodiments of this application are merely intended to help a person skilled in the art understand embodiments of this application, but are not intended to limit embodiments of this application to the specific scenarios in the examples. It is clear that a person skilled in the art can make various equivalent modifications or variations to the examples in the method 300 and the method 400, and such modifications or variations also fall within the scope of embodiments of this application.

It can be further understood that some optional features in embodiments of this application may be independent of other features in some scenarios, or may be combined with other features in some scenarios. This is not limited.

It may be further understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It should be understood that "preconfigured" in this application may be understood as "predefined", "defined", "stored", "pre-stored", "pre-negotiated", "hard coded", or "preprogrammed".

It can be understood that, in this application, "if" means that an apparatus performs corresponding processing in a specific objective situation, but is not intended to limit time, does not require the apparatus to necessarily perform a determining action during implementation, and does not mean that there is another limitation.

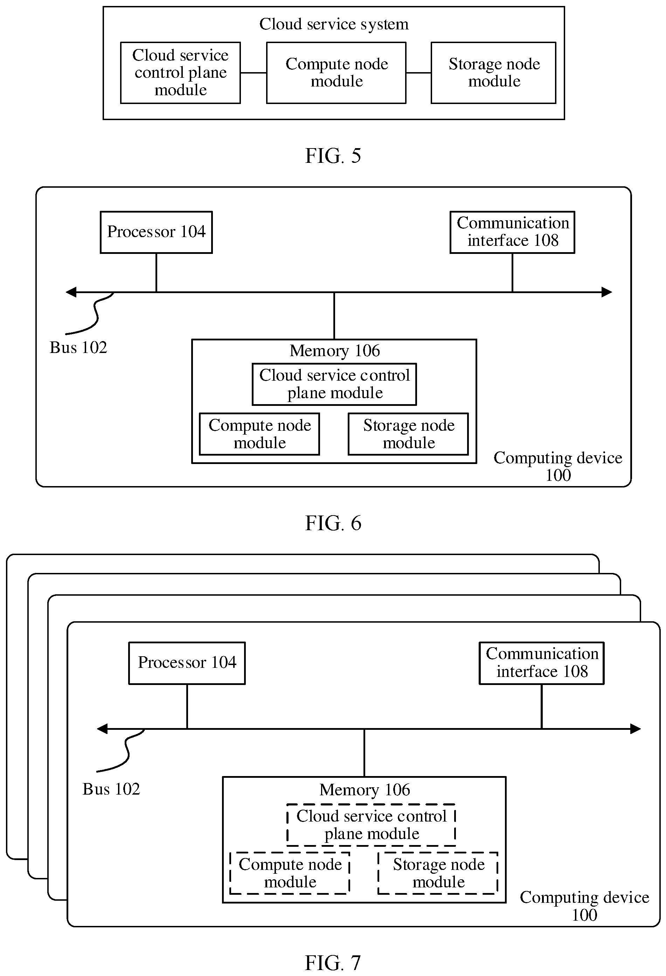

This application further provides a cloud service system. As shown in FIG. 5, the system includes a cloud service control plane module, a compute node module, and a storage node module. The cloud service system may further include a user interface module. The user interface module is configured to: establish a connection to a client, and receive a message from the client.

The cloud service control plane module is configured to generate N second messages based on a first message, where the first message is a data query request message, each of the N second messages is an approximate query processing AQP message, each of the N second messages corresponds to a sampling parameter, the sampling parameters have different values, and the N is an integer greater than 1. The compute node module is configured to obtain, based on the N second messages, a data query result corresponding to each second message; and the compute node module is configured to send M data query response messages, where each of the M data query response messages carries the data query result, the M data query response messages are in one-to-one correspondence with M second messages in the N second messages, and the M is less than or equal to the N.

In a possible implementation, the compute node includes N computing clusters, and the cloud service system further includes the storage node module. The cloud service control plane module is further configured to send the N second messages to the N computing clusters respectively, where the N computing clusters are in one-to-one correspondence with the N second messages. The N computing clusters are configured to obtain data from the storage node based on the N second messages respectively, to generate the data query results.

In a possible implementation, the control plane module is further configured to receive the first message, where the first message is a structured query language SQL message.

In a possible implementation, the control plane module is further configured to: receive a third message, and generate the first message based on the third message. The first message is a structured query language SQL message, the third message is a data query request message, and the third message is in a language different from that of the first message.

In a possible implementation, the cloud service system further includes the user interface module, where the user interface module is configured to establish a connection to the client. If the M data query response messages meet a first condition, the user interface module is configured to disconnect from the client, where the first condition is used to determine whether a corresponding data query result carried in each of the M data query response messages meets first accuracy.

In this application, the cloud service control plane module, the compute node module, and the storage node module may all be implemented by using software, or may be implemented by using hardware. The following describes an implementation of the cloud service control plane module as an example. Likewise, for implementations of the compute node module and the storage node module, refer to the implementation of the cloud service control plane module.

In this application, a "module" is used as an example of a software functional unit. The cloud service control plane module may include code running on a compute instance. The compute instance may be at least one of computing devices such as a physical host (computing device), a virtual machine, and a container. Further, there may be one or more computing devices. For example, the cloud service control plane module may include code running on a plurality of hosts/virtual machines/containers. It should be noted that the plurality of hosts/virtual machines/containers configured to run the application may be distributed in a same region, or may be distributed in different regions. The plurality of hosts/virtual machines/containers configured to run the code may be distributed in a same AZ, or may be distributed in different AZs. Each AZ includes one data center or a plurality of data centers that are geographically close to each other. One region may usually include a plurality of AZs.

Likewise, the plurality of hosts/virtual machines/containers configured to run the code may be distributed in a same VPC, or may be distributed in a plurality of VPCs. One VPC is usually set in one region. A communication gateway needs to be set in each VPC for communication between two VPCs in a same region or between VPCs in different regions. Interconnection between the VPCs is implemented through the communication gateways.

A module is used as an example of a hardware functional unit. The cloud service control plane module may include at least one computing device, for example, a server. Alternatively, the cloud service control plane module may be a device implemented by using an ASIC or implemented by using a PLD, or the like. The PLD may be implemented by using a CPLD, an FPGA, a GAL, or any combination thereof.

The plurality of computing devices included in the cloud service control plane module may be distributed in a same region, or may be distributed in different regions. The plurality of computing devices included in the cloud service control plane module may be distributed in a same AZ, or may be distributed in different AZs. Likewise, the plurality of computing devices included in the cloud service control plane module may be distributed in a same VPC, or may be distributed in a plurality of VPCs. The plurality of computing devices may be any combination of computing devices such as a server, an ASIC, a PLD, a CPLD, an FPGA, and a GAL.

This application further provides a computing device 100. As shown in FIG. 6, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. Buses may be classified into address buses, data buses, control buses, and the like. For ease of representation, only one line is used for representation in FIG. 6, but this does not mean that there is only one bus or only one type of bus. The bus 102 may include a path for transmitting information between the components (for example, the memory 106, the processor 104, and the communication interface 108) of the computing device 100.

The processor 104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement the functions of the cloud service control plane module, the compute node module, and the storage node module, so as to implement the data query method. In other words, the memory 106 stores instructions for performing the data query method.

Alternatively, the memory 106 stores executable code. The processor 104 executes the executable code to separately implement the functions of the cloud service control plane module, the compute node module, and the storage node module, so as to implement the data query method. In other words, the memory 106 stores instructions for performing the data query method.

The communication interface 103 uses, for example but not limited to, a network interface card, or a transceiver module such as a transceiver, to implement communication between the computing device 100 and another device or a communication network.

An embodiment of this application further provides a computing device cluster. The computing device cluster includes at least one computing device. The computing device may be a server, for example, a central server, an edge server, or an on-premises server in an on-premises data center. In some embodiments, the computing device may alternatively be a terminal device, for example, a desktop computer, a notebook computer, or a smartphone.

As shown in FIG. 7, the computing device cluster includes at least one computing device 100. A memory 106 or memories 106 in the one or more computing devices 100 in the computing device cluster may store same instructions for performing the data query method.

In some possible implementations, the memory 106 or the memories 106 in the one or more computing devices 100 in the computing device cluster may alternatively separately store some instructions for performing the data query method. In other words, a combination of the one or more computing devices 100 may jointly execute the instructions for performing the data query method.

It should be noted that the memories 106 in the different computing devices 100 in the computing device cluster may store different instructions, which may be used for implementing the functions of one or more modules of the cloud service control plane module, the compute node module, and the storage node module.

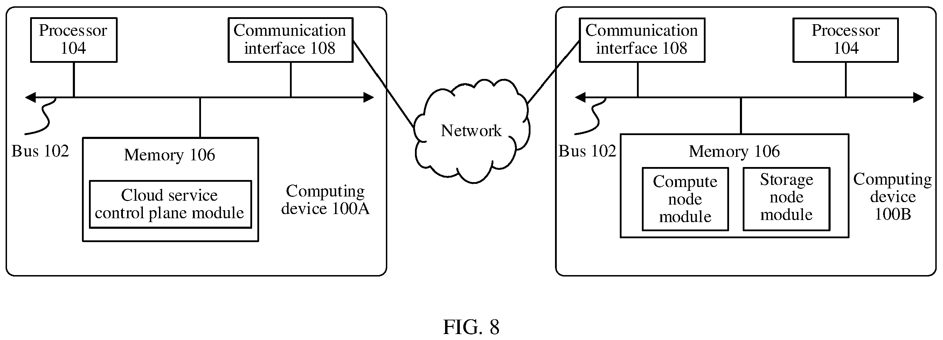

In some possible implementations, the one or more computing devices in the computing device cluster may be connected through a network. The network may be a wide area network, a local area network, or the like. FIG. 8 shows a possible implementation. As shown in FIG. 8, two computing devices 100A and 100B are connected through a network. Specifically, each computing device is connected to the network through a communication interface of the computing device. In this type of possible implementation, a memory 106 in the computing device 100A stores instructions for performing the functions of the cloud service control plane module. In addition, a memory 106 in the computing device 100B stores instructions for performing the functions of the compute node module and the storage node module.

In the manner of the connection between computing device clusters shown in FIG. 8, in consideration that a large amount of data needs to be stored and queried in the data query method provided in this application, the functions implemented by the compute node module and the storage node module are performed by the computing device 100B.

It should be understood that functions of the computing device 100A shown in FIG. 8 may alternatively be implemented by a plurality of computing devices 100. Likewise, functions of the computing device 100B may alternatively be implemented by a plurality of computing devices 100.

An embodiment of this application further provides another computing device cluster. For a connection relationship between computing devices in the computing device cluster, refer to the connection manners of the computing device clusters shown in FIG. 7 and FIG. 8. A difference is that a memory 106 or memories 106 in one or more computing devices 100 in the computing device cluster may store same instructions for performing the data query method.

In some possible implementations, the memory 106 or the memories 106 in the one or more computing devices 100 in the computing device cluster may alternatively separately store some instructions for performing the data query method. In other words, a combination of the one or more computing devices 100 may jointly execute the instructions for performing the data query method.

It should be noted that the memories 106 in the different computing devices 100 in the computing device cluster may store different instructions, which are used for performing some functions of the cloud service system. In other words, the instructions stored in the memories 106 in the different computing devices 100 may be used for implementing the functions of one or more modules of the cloud service control plane module, the compute node module, and the storage node module.

An embodiment of this application further provides a computer program product including instructions. The computer program product may be software or a program product that includes the instructions and that can run on a computing device or be stored in any usable medium. When the computer program product runs on at least one computing device, the at least one computing device is enabled to perform the data query method 300 or the data query method 400.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the data query method 300, or instruct the computing device to perform the data query method 400.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions in embodiments of the present invention.

## Claims

1. A data query method, applied to a cloud service system architecture, and comprising:
generating N second messages based on a first message, wherein the first message is a data query request message, each of the N second messages is an approximate query processing AQP message, each of the N second messages corresponds to a sampling parameter, the sampling parameters have different values, and the N is an integer greater than 1;
obtaining, based on the N second messages, a data query result corresponding to each second message; and
sending M data query response messages, wherein each of the M data query response messages carries a corresponding data query result, the M data query response messages are in one-to-one correspondence with M second messages in the N second messages, and the M is less than or equal to the N.

2. The method according to claim 1, wherein the cloud service system architecture comprises N computing clusters and a storage node, and
the obtaining, based on the N second messages, a data query result corresponding to each second message comprises:
sending the N second messages to the N computing clusters respectively, wherein the N computing clusters are in one-to-one correspondence with the N second messages; and obtaining, by the N computing clusters, data from the storage node based on the N second messages respectively, to generate the data query results.

3. The method according to claim 1 or 2, wherein the M data query response messages are data query response messages corresponding to the M second messages with smaller sampling parameter values in the N second messages.

4. The method according to any one of claims 1 to 3, wherein the cloud service system architecture establishes a connection to a client, and the method further comprises:
if the sent M data query response messages meet a first condition, disconnecting, by the cloud service system architecture, from the client, wherein the first condition is used to determine whether a corresponding data query result carried in each of the M data query response messages meets first accuracy.

5. The method according to any one of claims 1 to 4, wherein the N and the M are configured by the client, or the N and the M are configured by the cloud service system architecture.

6. The method according to any one of claims 1 to 5, wherein the method further comprises:
receiving the first message, wherein the first message is a structured query language SQL message.

7. The method according to claim 6, wherein the first message carries indication information, and the indication information indicates to feed back the M data query response messages.

8. The method according to any one of claims 1 to 5, wherein the method further comprises:
receiving a third message, wherein the third message is a data query request message, and the third message is in a language different from that of the first message; and
generating the first message based on the third message, wherein the first message is a structured query language SQL message.

9. The method according to claim 8, wherein the third message carries indication information, and the indication information indicates to feed back the M data query response messages.

10. The method according to claim 8 or 9, wherein the third message is a Python message.

11. A cloud service system, comprising a cloud service control plane module and a compute node module, wherein
the cloud service control plane module is configured to generate N second messages based on a first message, wherein the first message is a data query request message, each of the N second messages is an approximate query processing AQP message, each of the N second messages corresponds to a sampling parameter, the sampling parameters have different values, and the N is an integer greater than 1;
the compute node module is configured to obtain, based on the N second messages, a data query result corresponding to each second message; and
the compute node module is configured to send M data query response messages, wherein each of the M data query response messages carries a corresponding data query result, the M data query response messages are in one-to-one correspondence with M second messages in the N second messages, and the M is less than or equal to the N.

12. The system according to claim 11, wherein the compute node comprises the N computing clusters, and the cloud service system further comprises a storage node module; and
that the compute node module is configured to obtain, based on the N second messages, a data query result corresponding to each second message comprises:
the cloud service control plane module is further configured to send the N second messages to the N computing clusters respectively, wherein the N computing clusters are in one-to-one correspondence with the N second messages; and the N computing clusters are configured to obtain data from the storage node based on the N second messages respectively, to generate the data query results.

13. The system according to claim 11 or 12, wherein the M data query response messages are data query response messages corresponding to the M second messages with smaller sampling parameter values in the N second messages.

14. The system according to any one of claims 11 to 13, wherein the cloud service system further comprises a user interface module, and the user interface module is configured to establish a connection to a client; and
if the M data query response messages meet a first condition, the user interface module is configured to disconnect from the client, wherein the first condition is used to determine whether a corresponding data query result carried in each of the M data query response messages meets first accuracy.

15. The system according to any one of claims 11 to 14, wherein the N and the M are configured by the client, or the N and the M are configured by the cloud service system architecture.

16. The system according to any one of claims 11 to 15, wherein the cloud service control plane module is further configured to receive the first message, wherein the first message is a structured query language SQL message.

17. The system according to claim 16, wherein the first message carries indication information, and the indication information indicates to feed back the M data query response messages.

18. The system according to any one of claims 11 to 15, wherein the cloud service control plane module is further configured to: receive a third message, and generate the first message based on the third message, wherein the first message is a structured query language SQL message, the third message is a data query request message, and the third message is in a language different from that of the first message.

19. The system according to claim 18, wherein the third message carries indication information, and the indication information indicates to feed back the M data query response messages.

20. The system according to claim 18 or 19, wherein the third message is a Python message.

21. A computing device, comprising a processor and a memory, wherein the processor runs instructions in the memory, so that the computing device performs the method according to any one of claims 1 to 10.

22. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 10.

23. A chip, comprising a processor and a data interface, wherein the processor reads, through the data interface, instructions stored in a memory, so that the chip performs the method according to any one of claims 1 to 10.

24. A computer program product comprising instructions, wherein when the instructions are run by a computing device cluster, the computing device cluster is enabled to perform the method according to any one of claims 1 to 10.

25. A computer-readable storage medium, comprising computer program instructions, wherein when the computer program instructions are executed by a computing device cluster, the computing device cluster performs the method according to any one of claims 1 to 10.
